# EUROPÄISCHE PATENTSCHRIFT

(11) **EP 0 941 565 B1**
(45) Veröffentlichungstag und Bekanntmachung des Hinweises auf die Patenterteilung: **24.01.2001**
(21) Anmeldenummer: 97952700.9
(22) Anmeldetag: 26.11.1997
(51) Int. Cl.: H02B 13/025, H01H 9/34

(54) **STÖRLICHTBOGENABSORBEREINRICHTUNG MIT MEHREREN ABSORBERELEMENTEN**
ACCIDENTAL ARC ABSORBER DEVICE WITH SEVERAL ABSORBER ELEMENTS
DISPOSITIF ABSORBEUR D'ARCS ELECTRIQUES ACCIDENTELS A PLUSIEURS ELEMENTS ABSORBEURS

(30) Priorität: 29.11.1996 DE 29621287 U
(43) Veröffentlichungstag der Anmeldung: 15.09.1999
(73) Patentinhaber: SIEMENS AKTIENGESELLSCHAFT, 80333 München (DE)
(72) Erfinder: BETZMANN, Martin, D-61273 Wehrheim (DE); SPÄCK, Helmut, D-63739 Aschaffenburg (DE); HARBECKE, Günter-Gustav, D-63526 Erlensee (DE)
(86) Internationale Anmeldenummer: DE9702822
(87) Internationale Veröffentlichungsnummer: WO9824159

(56) Entgegenhaltungen:
- DE-A- 1 910 497
- DE-A- 3 436 108
- DE-A- 4 141 685
- DE-A- 4 220 790
- DE-A- 4 403 355

## Beschreibung

Die Erfindung betrifft eine Störlichtbogenabsorbereinrichtung mit mehreren Absorberelementen zur Druckentlastung und zur Wärmeabführung von Schaltgasen, insbesondere für Mittelspannungsschaltanlagen.

Eine Störlichtbogenabsorbereinrichtung dieser Art ist u. a. durch die DE 42 20 790 A1 bekannt. Die Störlichtbogenabsorbereinrichtung ist dort an der Rückseite einer lichtbogenfest ausgeführten Schaltzelle angebracht und ermöglicht im Störlichtbogenfall, daß die dabei entstehenden heißen Gase durch eine in der Schaltzelle vorgesehene Durchtrittsöffnung in die Störlichtbogenabsorbereinrichtung gelangen. Im Störlichtbogenfall werden die heißen Gase durch einen an die Durchtrittsöffnung anschließenden Kanal zu einer Ausströmöffnung geleitet, und so aus der Mittelspannungsschaltanlage herausgeführt. Innerhalb der kanalartig ausgeführten Störlichtbogenabsorbereinrichtung sind zichzackförmig gebogene Bleche mit Löchern angeordnet, die im wesentlichen die Verwirbelung der heißen Gase bewirken, so daß sich diese an den Blechen entsprechend abkühlen können.

Aus der DE 44 03 355 A1 ist ein Lichtbogenabsorber bekannt, bei dem innerhalb eines Gehäuses mehrere Wärmetauscherbleche vorgesehen sind, die den Gehäuseinnenraum in sich in Strömungsrichtung verjüngende Kanäle unterteilen. Zwischen den Wärmetauscherblechen sind zusätzlich sogenannte Verwirbelungsgitter vorgesehen, die zur Abkühlung der heißen Gase im Störlichtbogenfall beitragen.

Durch die DE 41 41 685 A1 ist außerdem bekannt, daß ein Durchbruch der Schaltanlage durch mehrere plissierte, gewellte oder meanderförmig geformte Streckmetallgitter abzudecken sind, um sowohl die heißen Gase aus der Schaltanlage zu führen als auch deren Abkühlung zu bewirken.

Die der Erfindung zugrundeliegende Aufgabe besteht darin, eine Störlichtbogenabsorbereinrichtung zu definieren, die konstruktiv wesentlich vereinfacht aufgebaut ist und in der weitestgehend vereinheitlichte Bauelemente eingesetzt sind, mit denen sowohl der Wärmeaustausch als auch die Druckentlastung nach außen ohne Einschränkungen realisiert ist. Erfindungsgemäß wird dies durch die Merkmale
1.1 die Störlichtbogenabsorbereinrichtung ist mit gleichartig geformten Lochblechen ausgestattet,
1.2 die Lochbleche sind in der Störlichtbogenabsorbereinrichtung lamellenförmig angeordnet,
1.3 die Lochbleche sind in ihrer Längenausdehnung innerhalb der Störlichtbogenabsorbereinrichtung in Strömungsrichtung angeordnet,
1.4 die Lochbleche sind in der Störlichtbogenabsorbereinrichtung derart versetzt angeordnet, daß sich wechselsseitig in Strömungsrichtung der Schaltgase querschnittsverändernde Hohlräume bilden, und daß sich im Bereich des Durchflusses der Schaltgase nach den Öffnungen der Lochbleche stets Querschnittserweiterungen ergeben.

Mit dem Einsatz gleichartig geformter Lochbleche, die innerhalb der Störlichtbogenabsorbereinrichtung in Lamellenform so angeordnet sind, daß die durchfließenden heißen Gase nach den Öffnungen der Lochbleche stets in einen erweiterten Hohlraum geführt sind, ist mit sehr einfachen Mitteln ein sehr hoher Verwirbelungsgrad für die heißen Schaltgase erreicht. Die Lochbleche sind in den Störlichtbogenabsorbereinrichtungen im Seitenbereich derselben gelagert und dort lagefixiert.

Gemäß einer vorteilhaften Ausgestaltung der Erfindung sind die Merkmale
2.1 die Lochbleche weisen noppenförmig ausgebildete Stanzöffnungen auf,
2.2 die Lochbleche sind in der Störlichtbogenabsorbereinrichtung jeweils spiegelförmig versetzt zueinander angeordnet, vorgesehen.
Durch die noppenförmigen Stanzöffnungen weist das Lochblech insgesamt eine sehr große Stabilität auf, wodurch die Druckverformungen im Störlichtbogenfall weitestgehend vermieden sind.

Eine weitere Erfindung ist durch die Merkmale
3.1 die Störlichtbogenabsorbereinrichtung ist mit gleichartig geformten Lochblechen ausgestattet,
3.2 die Lochbleche sind in der Störlichtbogenab sorbereinrichtung lamellenförmig angeordnet,
3.3 die Lochbleche sind in der Störlichtbogenabsorbereinrich tung derart versetzt angeordnet, daß sich wechselseitig in Strömungsrichtung der Schaltgase querschnittsverän dernde Hohlräume bilden, und daß sich im Bereich des Durchflusses der Schaltgase nach den Öffnungen der Lochbleche stets Querschnittserweiterung ergeben,
3.4 die Lochbleche sind durch zur Strömungsrichtung der Schaltgase annähernd um einen halben rechten Winkel versetzt angeordnete Leitbleche realisiert, die einseitig wechselseitig am Begrenzungsbereich der Störlichtbogenabsorbereinrichtung befestigt sind,
3.5 die Leitbleche sind annähernd im rechten Winkel zueinander versetzt angeordnet, gegeben.
Die innerhalb der Störlichtbogenabsorbereinrichtung einseitig versetzt und zur Strömung der Gase im halben rechten Winkel liegenden Leitbleche, die annähernd rechtwinklig zueinander und an den freien Enden jeweils mit einem Abstand zum nächsten angeordnet sind, ergeben einen sehr hohen Verwirbelungsgrad und erhöhen somit den Abkühlungsgrad der heißen Gase.

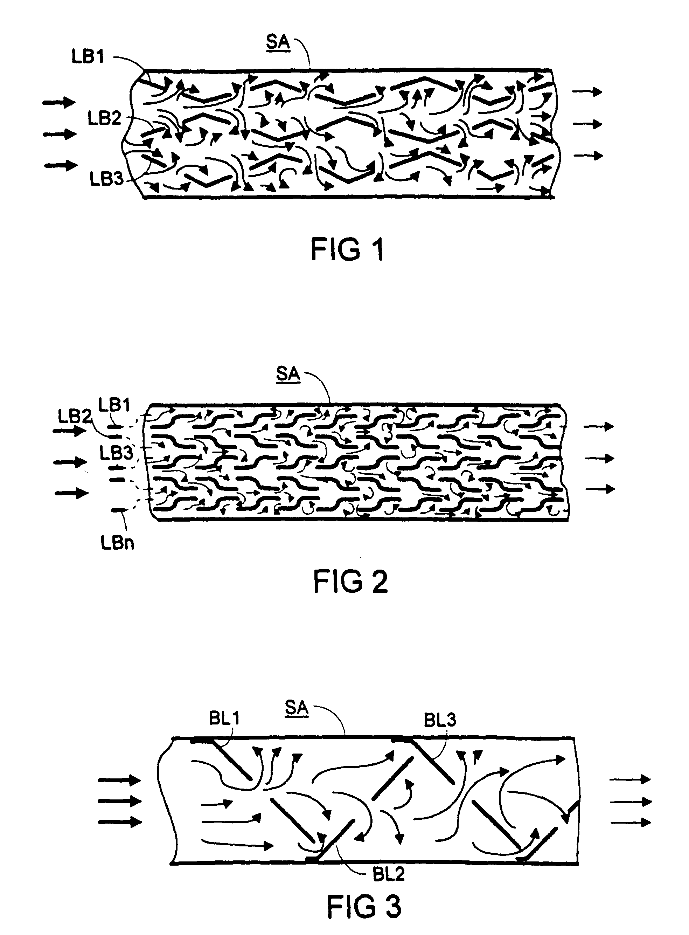

Die Erfindungen werden durch drei Ausführungsbeispiele in den Figuren 1 bis 3 näher erläutert, in denen die Störlichtbogenabsorbereinrichtungen als Durchflußkanal im Querschnitt dargestellt sind.

Die Figur 1 zeigt die Störlichtbogenabsorbereinrichtung SA, in deren Innenraum drei Lochbleche LB1, LB2 und LB3 angeordnet sind. Die Lochbleche LB1, LB2, LB3 sind dachförmig abgebogen und weisen jeweils im Mittenbereich der Steigung bzw. der Gefälle nicht bezeichnete Löcher auf, durch die die heißen Gase bei ihrem Durchtritt entsprechend verwirbelt werden. In dieser Störlichtbogenabsorbereinrichtung SA sind die Lochbleche LB1, LB2 und LB3 derart versetzt angeordnet, daß sich im Bereich des Durchflusses der Schaltgase nach den Öffnungen der Lochbleche LB1, LB2, LB3 stets der Hohlraum erweitert. Durch diese Erweiterung des Hohlraumes entstehen starke Verwirbelungen der Schaltgase, so daß diese an den entsprechenden Lochblechen LB1, LB2, LB3 entsprechend abgekühlt werden können. Gleichzeitig mit der Abkühlung wird auch die Durchflußgeschwindigkeit der Gase durch die starke Verwirbelung herabgesetzt, so daß das Herausführen der Gase aus den Schaltanlagen gefahrlos erfolgt.

Die Figur 2 zeigt eine Störlichtbogenabsorbereinrichtung, bei der die Absorberelemente als Lochbleche LB1, LB2, LBn mit noppenförmig ausgebildeten Stanzöffnungen SÖ versehen sind.

Die Lochbleche LB1, LB2, LBn sind hier innerhalb der Störlichtbogenabsorbereinrichtung SA spiegelsymmetrisch angeordnet, so daß sich auch hier wechselseitig in Strömungsrichtung der Gase volumenverändernde Hohlräume bilden. Mit dieser Ausgestaltung der Störlichtbogenabsorbereinrichtung SA wird ebenfalls eine sehr starke Verwirbelung der heißen Gase erreicht, bei der sich ebenfalls der Druck im Austrittsbereich der Störlichtbogenabsorbereinrichtung bis auf zulässige Grenzwerte abgebaut hat. Die noppenförmigen Lochbleche LB1, LB2, LBn sind in sich sehr stabil, so daß auch bei größerer Druckbelastung eine Druckverformung dieser Lochbleche LB1, LB2, LBn verhindert ist.

Die Figur 3 zeigt eine Störlichtbogenabsorbereinrichtung SA, die im Bereich der Außenbegrenzung mit entgegen zur Strömungsrichtung annähernd im halben Winkel abgebogene Leitbleche BL1, BL2, BL3 vorgesehen sind. Die Leitbleche BL1, BL2, BL3 sind jeweils wechselseitig zueinander am Außenbereich der Störlichtbogenabsorbereinrichtung SA lagefixiert. Die Leitbleche BL1, BL2, BL3 sind rechtwinklig so zueinander angeordnet, daß ihre freien Enden mit in jeweils nachfolgenden Leitblechen BL1, BL2 und BL3 eine nicht näher bezeichnete Schlitzöffnung bilden, durch die die einströmenden Gase ebenfalls verwirbelt werden.

## Patentansprüche

1. Störlichtbogenabsorbereinrichtung mit mehreren Absorberelementen zur Druckentlastung und zur Wärmeabführung von Schaltgasen, insbesondere für Mittelspannungsschaltanlagen,
**gekennzeichnet durch** die Merkmale
1.1 die Störlichtbogenabsorbereinrichtung (SA) ist mit gleichartig geformten Lochblechen (LB1, 2, n) ausgestattet,
1.2 die Lochbleche (LB1, 2, n) sind in der Störlichtbogenabsorbereinrichtung (SA) lamellenförmig angeordnet,
1.3 die Lochbleche (LB1, 2, n) sind in ihrer Längenausdehnung innerhalb der Störlichtbogenabsorbereinrichtung (SA) in Strömungsrichtung (SR) angeordnet,
1.4 die Lochbleche (LB) sind in der Störlichtbogenabsorbereinrichtung (SA) derart versetzt angeordnet, daß sich wechselseitig in Strömungsrichtung der Schaltgase querschnittsverändernde Hohlräume bilden und daß sich im Bereich des Durchflusses der Schaltgase nach den Öffnungen der Lochbleche (LB 1, 2, n) stets Querschnittserweiterungen ergeben.

2. Störlichtbogenabsorbereinrichtung nach Anspruch 1,
**gekennzeichnet durch** die Merkmale
2.1 die Lochbleche (LB1, 2, n) weisen noppenförmig ausgebildete Stanzöffnungen (SÖ) auf,
2.2 die Lochbleche (LB1, 2, n) sind in der Störlichtbogenabsorbereinrichtung (SA) jeweils spiegelförmig versetzt zueinander angeordnet.

3. Störlichtbogenabsorbereinrichtung mit mehreren Absorberelementen zur Druckentlastung und zur Wärmeabführung von Schaltgasen, insbesondere für Mittelspannungsschaltanlagen,
**gekennzeichnet durch** die Merkmale
3.1 die Störlichtbogenabsorbereinrichtung (SA) ist mit gleichartig geformten Lochblechen (LB1, 2, n) ausgestattet,
3.2 die Lochbleche (LB1, 2, n) sind in der Störlichtbogenab sorbereinrichtung (SA) lamellenförmig angeordnet,
3.3 die Lochbleche (LB) sind in der Störlichtbogenabsorbereinrichtung (SA) derart versetzt angeordnet, daß sich wechselseitig in Strömungsrichtung der Schaltgase querschnittsverändernde Hohlräume bilden und daß sich im Bereich des Durchflusses der Schaltgase nach den Öffnungen der Lochbleche (LB 1, 2, n) stets Querschnittserweiterungen ergeben,
3.4 die Lochbleche sind durch zur Strömungsrichtung der Schaltgase annähernd um einen halben rechten Winkel versetzt angeordnete Leitbleche (BL1, 2, n) realisiert, die einseitig wechselseitig am Begrenzungsbereich der Störlichtbogenabsorbereinrichtung (SA) befestigt sind,
3.5 die Leitbleche (BL) sind annähernd im rechten Winkel zueinander versetzt angeordnet.

## Claims

1. An interference arc absorber device having a plurality of absorber elements for pressure relief and for heat dissipation of switching gases, in particular for medium voltage switchgear, characterised by the features:
1.1 the interference arc absorber device (SA) is equipped with homogeneously shaped perforated plates (LB1, 2, n),
1.2 the perforated plates (LB1, 2, n) are arranged in the manner of fins in the interference arc absorber device (SA),
1.3 the perforated plates (LB1, 2, n) are arranged in their longitudinal extension in the direction of flow (SR) within the interference arc absorber device (SA),
1.4 the perforated plates (LB) are arranged offset in the interference arc absorber device (SA) in such a manner that cavities of varying cross section are formed on alternate sides in the direction of flow of the switching gases, and cross sectional enlargements are always produced in the region of the through flow of the switching gases downstream of the apertures of the perforated plates (LB1, 2, n).

2. An interference arc absorber device according to claim 1, characterised by the features:
2.1 the perforated plates (LB1, 2, n) comprise nub-shaped stamped apertures (SO),
2.2 the perforated plates (LB1, 2, n) are arranged offset in mirror fashion relative to one another in the interference arc absorber device (SA).

3. An interference arc absorber device having a plurality of absorber elements for pressure relief and for heat dissipation of switching gases, in particular for medium voltage switchgear, characterised by the features:
3.1 the interference arc absorber device (SA) is equipped with homogeneously shaped perforated plates (LB1, 2, n),
3.2 the perforated plates (LB1, 2, n) are arranged in the manner of fins in the interference arc absorber device (SA),
3.3 the perforated plates (LB1, 2, n) are arranged offset in the interference arc absorber device (SA) in such a manner that cavities of varying cross section are formed on alternate sides in the direction of flow of the switching gases, and cross sectional enlargements are always produced in the region of the through flow of the switching gases downstream of the apertures of the perforated plates (LB1, 2, n),
3.4 the perforated plates are realised by guide plates (BL1, 2, n), which are arranged offset by a half right angle relative to the direction of flow of the switching gases and are secured at one end on alternate sides in the boundary region of the interference arc absorber device (SA),
3.5 the guide plates (BL) are arranged offset relative to one another approximately at right angles.

## Revendications

1. Dispositif absorbeur d'arcs électriques parasites, comportant plusieurs éléments absorbants pour la détente en pression et pour la dissipation de la chaleur de gaz de coupure, notamment pour des installations de coupure à moyenne tension, caractérisé par les caractéristiques
1.1 le dispositif (SA) absorbeur d'arcs électriques parasites est muni de tôles (LB1, LB2, LBn) perforées de forme du même genre,
1.2 les tôles (LB1, LB2, LBn) perforées sont montées en forme de lamelles dans le dispositif (SA) absorbeur d'arcs électriques parasites,
1.3 les tôles (LB1, LB2, LBn) perforées sont montées dans leur étendue longitudinale à l'intérieur du dispositif (SA) absorbeur d'arcs électriques parasites dans la direction (SR) d'écoulement,
1.4 les tôles (LB) perforées sont montées dans le dispositif (SA) absorbeur d'arcs électriques parasites en étant décalées de manière à former en alternance dans la direction d'écoulement des gaz de coupure des cavités faisant varier la section transversale et de manière à obtenir dans la zone du passage des gaz de coupure, en aval des ouvertures des tôles (LB1, LB2, LBn) perforées, toujours des élargissements de section transversale.

2. Dispositif absorbeur d'arcs électriques parasites suivant la revendication 1, caractérisé par les caractéristiques
2.1 les tôles (LB1, LB2, LBn) perforées comportent des ouvertures perforées réalisées en forme de boutons,
2.2 les tôles (LB1, LB2, LBn) perforées sont montées en étant décalées de manière symétrique comme en un miroir dans le dispositif (SA) absorbeur d'arcs électriques parasites.

3. Dispositif absorbeur d'arcs électriques parasites comportant plusieurs éléments absorbeurs pour la détente en pression et pour la dissipation de chaleur de gaz de coupure, notamment pour des installations de coupure à moyenne tension, caractérisé par les caractéristiques
3.1 le dispositif (SA) absorbeur d'arcs électriques parasites est muni de tôles (LB1, LB2, LBn) perforées de forme du même genre,
3.2 les tôles (LB1, LB2, LBn) perforées sont montées en forme de lamelles dans le dispositif (SA) absorbeur d'arcs électriques parasites,
3.3 les tôles (LB) perforées sont montées dans le dispositif (SA) absorbeur d'arcs électriques parasites en étant décalées de manière à former en alternance dans la direction d'écoulement des gaz de coupure des cavités faisant varier la section transversale et de manière à obtenir dans la zone du passage des gaz de coupure, en aval des ouvertures des tôles (LB1, LB2, LBn) perforées, toujours des élargissements de section transversale,
3.4 les tôles perforées sont réalisées par des chicanes (BL1, BL2, BLn) qui sont montées en étant décalées à peu près d'un demi angle droit par rapport à la direction d'écoulement des gaz de coupure et qui sont fixées en alternance d'un côté à la zone de délimitation du dispositif (SA) absorbeur d'arcs électriques,
3.5 les chicanes (BL) sont montées en étant décalées à peu près de l'angle droit les unes par rapport aux autres.
